(19) Europäisches Patentamt
European Patent Office
Office européen des brevets

(11) Veröffentlichungsnummer: **0 002 173**
**A1**

## (12) EUROPÄISCHE PATENTANMELDUNG

(21) Anmeldenummer: 78100626.7

(22) Anmeldetag: 08.06.78

(51) Int. Cl.²: **F 16 K 7/12**
**F 16 K 11/16**
**//F16K31/528**

(30) Priorität: 24.11.77 DE 2752549

(43) Veröffentlichungstag der Anmeldung:
13.06.79 **Patentblatt 79/12**

(84) Benannte Vertragsstaaten:
**BE CH DE FR GB NL SE**

(71) Anmelder: BOEHRINGER MANNHEIM GMBH
**Sandhofer Strasse 112-132 Postfach 31 01 20**
**D-6800 Mannheim 31- Waldhof(DE)**

(72) Erfinder: **Waldemar, Albert**
**Rat-Jung-Strasse 20**
**D-8133 Feldafing(DE)**

(72) Erfinder: **Edelmann, Hermann**
**Diemendorfer Strasse 21**
**D-8132 Tutzing-Unterzeismering(DE)**

(72) Erfinder: **Hagen, Alexander, Dr.**
**von-Kühlmann-Strasse 11**
**D-8132 Tutzing(DE)**

(74) Vertreter: **Weickmann, Heinrich, Dipl.-Ing. et al,**
**Postfach 860 820 Möhlstrasse 22**
**D-8000 München 86(DE)**

(54) **Membranventil.**

(57) Das Ventil umfaßt einen Grundkörper (1), in dessen Oberfläche (3) ein rinnenförmiger Kanal (4) eingearbeitet ist. Der Kanal (4) ist von einer elastischen Membran (6) abgedeckt, die von einem Gegenkörper (2) seitleich des Kanals (4) gegen die Oberfläche (3) des Grundkörpers (1) gedrückt wird. In dem Gegenkörper (2) ist wenigstens ein Stempel (9) verschiebbar geführt, mit dessen Hilfe die Membran (6) zum Absperren des in dem Kanal (4) strömenden Mediums elastisch verformend in den Kanal (4) eingedrückt werden kann.

FIG.1

EP 0 002 173 A1

0002173

## Ventil zur Steuerung von Strömungsmedien

Die Erfindung betrifft ein Ventil zur Steuerung von Strömungsmedien.

In vielen meßtechnischen Vorrichtungen, beispielsweise in chemischen Analysegeräten etwa für medizinische Zwekke, müssen Ströme von Gasen oder Flüssigkeiten umgeschaltet, vertauscht, umgekehrt usw. werden. Bislang wurden hierzu Ventile verwendet, die gegeneinander verdrehbare oder verschiebbare Absperrkörper enthielten.

Die aneinander gleitenden und damit reibenden Flächen müssen aus besonders ausgewählten Materialien bestehen und in ihrer Oberflächengüte hohen Anforderungen genügen. In der Regel sind hierzu spezielle Herstellungsverfahren notwendig. Die hohen Anforderungen an die Oberflächengüte der aneinander reibenden Teile wirkt sich nachteilig auf die Standzeit solcher Ventile aus, so daß diese in vergleichsweise kurzen Abständen regelmäßig nachgearbeitet werden müssen.

Aufgabe der Erfindung ist es daher, ein zur Steuerung von Strömungsmedien geeignetes Ventil zu schaffen, welches einfach im Aufbau ist und, verglichen mit dem bekannten Ventil, eine lange Lebensdauer hat. Diese Aufgabe wird erfindungsgemäß durch ein Ventil gelöst, bei welchem ein Grundkörper mit mindestens einem in seine Oberfläche eingearbeiteten rinnenförmigen Kanal zur Führung des Strömungsmediums, eine den Kanal abdeckende elastische Membran, ein die Membran zur seitlichen Abdichtung des Kanals gegen die Oberfläche des Grundkörpers drückender Gegenkörper und wenigstens ein durch den Gegenkörper geführter Stempel, mittels welchem die Membran elastisch verformend in den Kanal unter Absperrung desselben drückbar ist, vorgesehen sind. Ein solches Ventil kommt ohne aufwendige Fertigungsvorgänge mit geringen Toleranzen aus und enthält als einziges Verschleißteil die Membran, die vorteilhafterweise aus Silikongummi sein kann. Als Material für den Grundkörper und für den Gegenkörper eignen sich vorzugsweise Kunststoffe, insbesondere Polyoxymethylen. In eine Polyoxymethylenplatte, vorzugsweise mit einer planen Oberfläche werden hierbei zur Bildung der rinnenförmigen Kanäle Nuten, vorzugsweise mit halbkreisförmigem Querschnitt, eingefräst. Die Oberfläche wird dann mit einer Membran abgedeckt, und die Membran durch einen Gegenkörper mit zur Oberfläche des Grundkörpers komplementärer, vorzugsweise also planer, Oberfläche gegen den Grundkörper angepreßt. Gegen- und Grundkörper können hierzu miteinander verschraubt sein. Die in die Oberfläche des Grundkörpers eingearbeiteten rinnenförmigen Kanäle werden auf diese Weise durch die Membran seitlich flüssigkeits- bzw. gasdicht abgeschlossen. Beim Eindrücken eines Stempels in den Kanal wird dieser an der Eindrückstelle unterbrochen. Der Kopf des Stempels muß dabei nur ungefähr dem Querschnitt des Kanals angepaßt sein, weil die zwischen Stempel und Kanaloberfläche liegende Membran anpassend und gleichzeitig als Dichtung wirkt. Zur Vermeidung von Anschlußproblemen ist es äußerst vorteilhaft, wenn der oder die Kanäle nicht bis an den Rand des Grundkörpers geführt, sondern den Grundkörper durchsetzende in den oder die Kanäle mündende Zu- und Ableitungsbohrungen vorgesehen sind. Die Absperrung eines Kanals läßt sich besonders einfach bewerkstelligen, wenn die Stempel zwischen den Zu- und Ableitungsbohrungen in den Kanal drückbar angeordnet sind. Für den Transport, die Mischung oder Umleitung exakt bemessener Volumenströme ist es wesentlich, zwischen Anschlußbohrungen und/oder Kanalverzweigungsstellen kein Totvolumen zu haben, so daß bevorzugt durch Eindrücken eines oder mehrerer, vorzugsweise eines, Stempels das Kanalvolumen zwischen zwei definierten Stellen beseitigbar ist. In einer bevorzugten Ausgestaltung sind hierbei der oder die Stempel mit in Kanalrichtung verlaufendem T-förmigem Kopf ausgebildet.

Gemäß einer bevorzugten Ausführungsform, die sich besonders zur Durchmischung von Flüssigkeiten eignet, sind mindestens vier Stempel nebeneinander längs eines Kanals angeordnet und die Stempel so steuerbar, daß die endständigen Stempel den Kanal unterbrechen und die mittenständigen Stempel die Membran abwechselnd in den Kanal drücken. Sind mindestens drei Stempel längs eines Kanals angeordnet und diese wellenförmig aufeinanderfolgend in den Kanal drückbar, so lassen sich mit einem solchen Ventil auch Fördervorgänge durchführen.

Von besonderer Bedeutung ist, daß sich problemlos mehrere Kanäle zu einem Leitungsnetz kombinieren lassen, in welchem durch Stempel wechselnde Leitungswege freigegeben oder gesperrt werden können. Auf diese Weise lassen sich selbst kompliziertere strömungstechnische Schaltungen, etwa in chemischen oder medizinischen Analysevorrichtungen realisieren.

In einer Ausführungsform ist beispielsweise vorgesehen, daß in dem Grundkörper zwei Kanäle angeordnet sind, von denen der erste Kanal durch zwei im Abstand voneinander angeordnete Stempel verschließbar ist und über zwei im Abstand voneinander zwischen diesen Stempeln in den ersten Kanal mündende weitere Kanäle mit dem zweiten Kanal verbunden ist, daß der zweite Kanal durch wenigstens einen Stempel zwischen den beiden weiteren Kanälen verschließbar ist und daß die beiden weiteren Kanäle ebenfalls durch Stempel verschließbar sind. Eine derartige Anordnung erlaubt das

- 4 -     0002173

Einschleusen einer zwischen den beiden Stempeln des ersten Kanals eingeschlossenen Substanzmenge in den zweiten Kanal, kann also als Dosiervorrichtung benutzt werden.

Bei einer anderen Ausführungsform sind die Stempel parallel zur Drehachse einer mit axial vorstehenden Nocken
versehenen, auf die Stempel einwirkenden Nockenscheibe
angeordnet. Wenn in dieser Ausführungsform die Stempel in
Eckpunkten eines regelmäßigen Vielecks gerader Kantenzahl
angeordnet sind, die Nocken gleichen Winkelabstand voneinander haben und die Zahl der Stempel doppelt so groß
ist wie die Zahl der Nocken, so kann eine solche Vorrichtung zur Strömungsumschaltung benutzt werden, ohne daß
die Nockenscheibe mit wechselnder Drehrichtung angetrieben werden muß. Die Nockenscheibe öffnet bzw. sperrt auch
bei gleichbleibendem Antriebsdrehsinn wechselweise die
zu benachbarten Stempeln gehörenden Kanäle. Die Kanäle
sind bevorzugt in Form eines regelmäßigen Vielecks in
dem Grundkörper angeordnet, wobei die Zu- bzw. Ableitungsbohrungen in den Eckpunkten des Vielecks münden. Bevorzugt werden Ausführungsformen mit vier oder sechs Ecken.

Zum Antrieb der Stempel lassen sich nicht nur Nocken verwenden, geeignet sind auch Elektromagnete oder hydraulische bzw. pneumatische Zylinder, die bei eng aneinanderstehenden Stempeln über auf Druck beanspruchbare flexible Organe, etwa nach Art drucksteifer Bowdenzüge auf
die Stempel einwirken. Von Vorteil können auch Ausführungsformen sein, bei denen die Stempel als Kolben ausgebildet
sind, die über flexible Zuleitungen mit hydraulischem oder
pneumatischem Steuerdruck beaufschlagt werden.

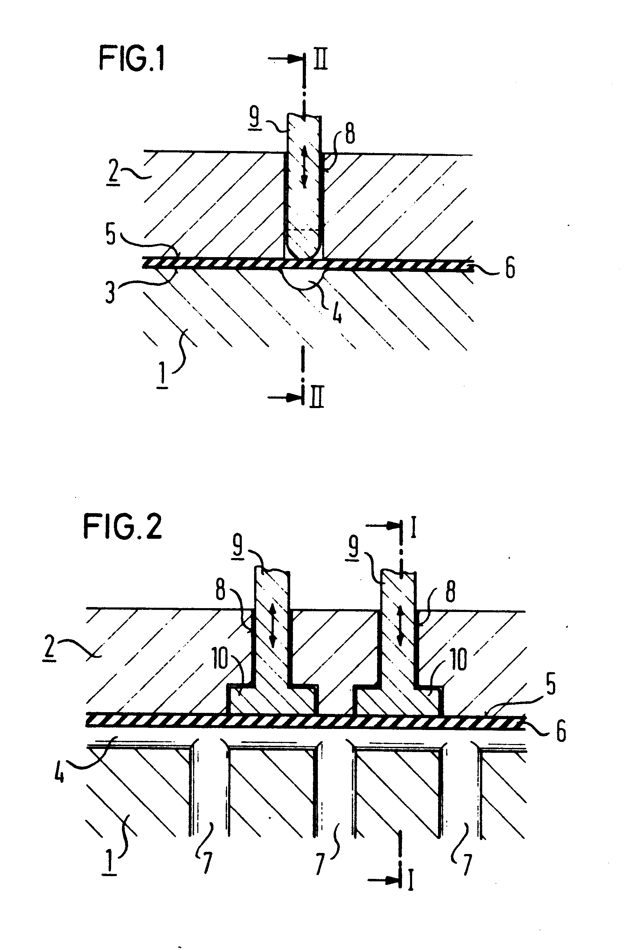

Bevorzugte Ausführungsformen der Erfindung sind im folgenden in Verbindung mit der beigefügten Zeichnung beschrieben. Auf dieser ist
Figur 1 ein Schnitt durch eine bevorzugte Ausführungsform
        des erfindungsgemäßen Ventils längs Linie I-I aus

- 5 -                                    0002173

Figur 2,

Figur 2 ein Schnitt längs Linie II-II aus Figur 1,

Figur 3 eine schematische Darstellung des erfindungsgemässen Ventils in einer Ausführungsform als Dosierventil,

Figur 4 eine schematische Darstellung des erfindungsgemäßen
Ventils in einer Ausführungsform als Ventil zur
Umsteuerung einer Durchflußfolge,

Figur 5 eine Explosionsansicht des Ventils nach Figur 4,

Figur 6 eine schematische Darstellung einer zum Mischen
und Fördern geeigneten Ausführungsform des erfindungsgemäßen Ventils, und

Figur 7 eine schematische Darstellung einer Betätigungsvorrichtung.

Das Ventil gemäß den Figuren 1 und 2 weist einen Grundkörper 1 und einen Gegenkörper 2 auf, die beispielsweise beide aus Polyoxymethylen bestehen. Der Grundkörper 1 weist
eine plane Oberfläche 3 auf, in die in Form von Nuten rinnenförmige Kanäle 4 (von denen einer dargestellt ist) mit
halbkreisförmigem Querschnitt eingefräst sind. Zwischen
Grundkörper 1 und dem ebenfalls eine plane Oberfläche 5
aufweisenden Gegenkörper 2 liegt eingepreßt eine elastische Membran 6, beispielsweise aus Silikongummi. Die Membran 6 schließt die Kanäle 4 seitlich dichtend nach oben
ab, so daß sich ein geschlossener Strömungsquerschnitt ergibt. In die Kanäle münden durch den Grundkörper 1 verlaufende Zu- und Ableitungsbohrungen 7, durch die das Strömungsmedium in die und aus den Kanälen 4 geleitet wird.
Durch im Gegenkörper 2 über den Kanälen 4 befindliche
Bohrungen 8 erstrecken sich Stempel 9 mit einem T-förmigen

Kopf 10, dessen Querschnitt in einer Ebene senkrecht zur Kanalachse demjenigen eines Kanals 4 angepaßt ist. Die Stempel 9 können in Richtung auf den Grundkörper 1 bewegt und unter elastischer Verformung der Membran 6 in den Kanalquerschnitt gedrückt werden. In der Endstellung des Stempels ist der Kanal dabei unterbrochen bzw. gesperrt. Der Querschenkel des T ist so lang gewählt, daß der Kanalhohlraum dann zwischen zwei Zu- und Ableitungsbohrungen 7 vollkommen beseitigt ist. Auf diese Weise lassen sich unerwünschte Rest- bzw. Totvolumina von Strömungsmedien vermeiden. Ebenso wie hier für jeweils zwei Zu- und Ableitungsbohrungen 7 dargestellt, können sich die Stempel auch aus dem gleichen Grund bis zu Verzweigungsstellen von Kanälen 4 erstrecken.

Ein solches Ventil, welches beispielsweise in chemischen oder medizinischen Analysevorrichtungen eingesetzt werden kann, arbeitet äußerst zuverlässig und hat eine um mehrere Größenordnungen höhere Lebensdauer als das eingangs erwähnte bekannte Ventil.

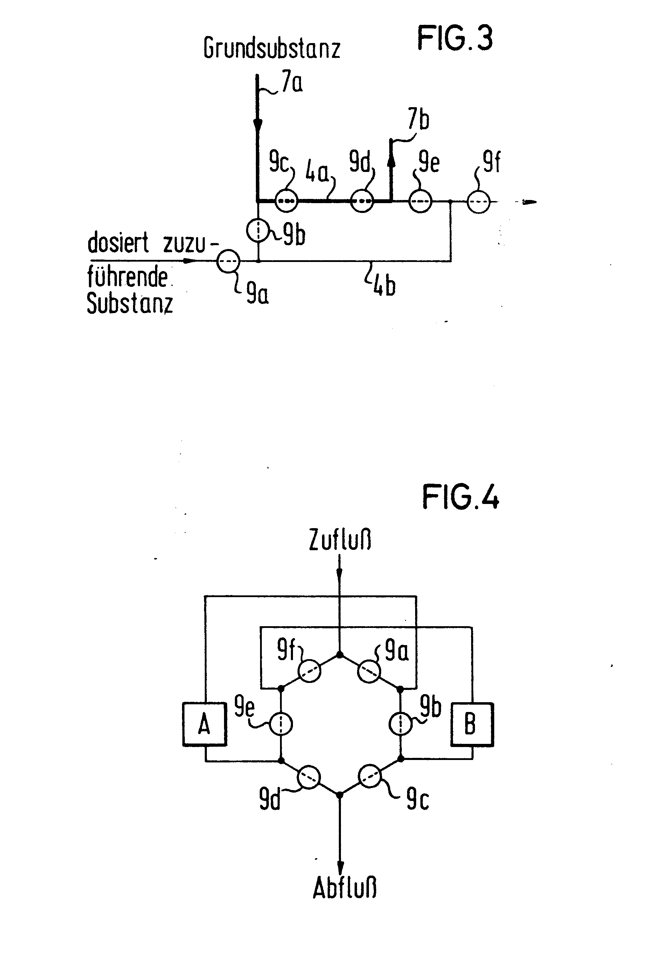

Figur 3 zeigt schematisch die Anordnung der Kanäle 4 und Ventilstempel 9 für ein Dosierventil. Im normalen Strömungszustand schließen die Stempel 9b und 9e, während die Stempel 9a, 9c, 9d und 9f in den Kanal freigebendem Zustand sind. Eine Grundsubstanz strömt dann längs der dick ausgezogenen Linie durch eine Zuleitungsbohrung 7a über 9c in einen Ventilkanal 4a ein und zwischen den Stempeln 9d und 9e über eine Ableitungsbohrung 7b wieder aus dem Ventil heraus. Gleichzeitig strömt über 9a eine der Grundsubstanz dosiert zuzuführende Substanz in einen Ventilkanal 4b des Ventils ein und über 9f wieder aus diesem heraus. Zur dosierten Zuführung dieser letzteren Substanz zur Grundsubstanz werden 9a, 9c, 9d und 9f in die sperrende Stellung gebracht, während 9b und 9e öffnen. Auf diese Weise wird die zwischen 9a und 9f bemessen eingeschlossene Menge an Dosiersubstanz in den Strom der Grundsubstanz eingeleitet. Um keine Toträume zu erreichen, in den undefinierbare Mengen an Substanzen stehenbleiben, ist es notwendig, daß die Stempel die Kanäle jeweils exakt bis zu den benachbarten Verzweigungspunkten absperren. Dies wird durch die T-förmige Ausbildung der Stempelköpfe 10 leicht erreicht, ohne daß es zu Schwierigkeiten durch zu eng aneinander stehende Bohrungen 8 kommt. Anstelle der beiden Stempel 9c und 9d kann gegebenenfalls auch lediglich ein einziger Stempel vorhanden sein.

Figur 4 zeigt schematisch eine Ausführungsform des erfindungsgemäßen Ventils, mit welchem die Durchflußfolge durch zwei Elemente A und B umgekehrt werden kann. Für die Durchflußfolge A—→B öffnen 9a, 9e und 9c, während 9b, 9d und 9f schließen. Umgekehrt ergibt sich die Durchflußfolge B—→A, wenn 9f, 9b und 9d öffnen, während 9e, 9c und 9a schließen.

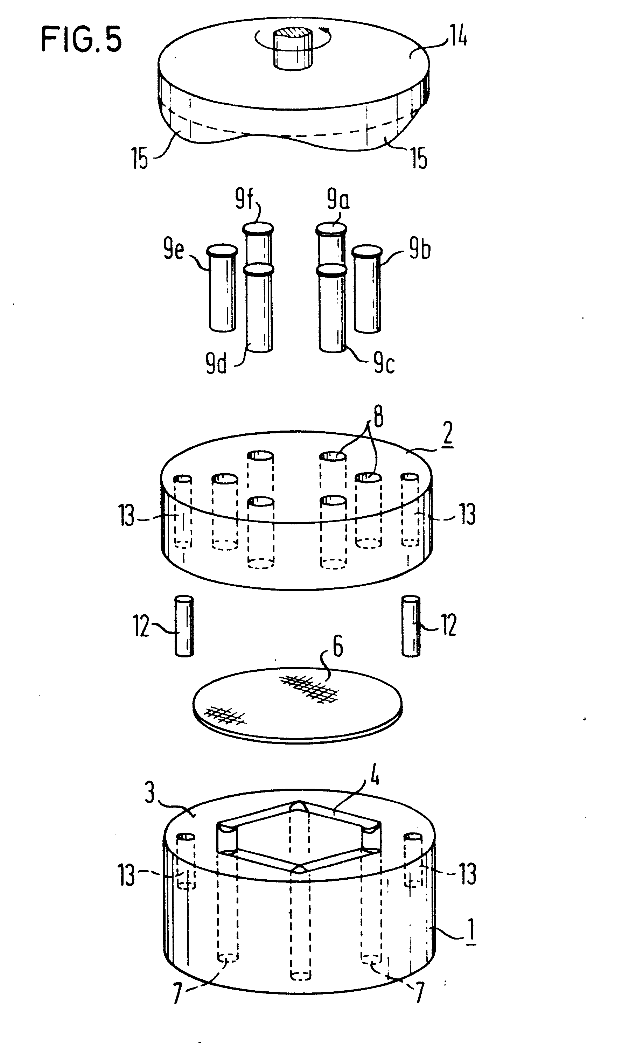

Figur 5 zeigt eine Explosionsansicht des Ventils nach Fig.4, bei welchem ein Kanal 4 längs eines Sechsecks angelegt ist, an dessen Ecken die durch den Grundkörper 1 geführten Zu- und Ableitungsbohrungen 7 in den Kanal 4 münden. Die Bohrungen 8 zur Aufnahme der Stempel 9a - f sind so im Gegenkörper 2 angeordnet, daß die Stempel an den Ecken eines regelmäßigen Sechseckes jeweils zwischen den Mündungen der Zu- und Ableitungsbohrungen 7 auf den Kanal 4 treffen. Zur justierten Montage von Grundkörper 1 und Gegenkörper 2 sind Paßstifte 12 vorgesehen, die in entsprechende im Grundkörper 1 und Gegenkörper 2 befindliche Bohrungen 13 eingesetzt werden. Zur Betätigung der Stempel 9a - 9f ist eine Nockenscheibe 14 vorgesehen, deren Drehachse parallel zur Schieberichtung der Stempel 9a bis f verläuft, und die auf ihrer den Stempeln 9a bis f zugekehrten Fläche 3 im Winkelabstand von 120° gegeneinander versetzte, axial vorstehende Nocken 15 trägt. Die Nockenscheibe 14 wird mit gleichbleibendem Drehsinn angetrieben und schließt bzw. öffnet benachbarte Kanäle wechselweise. Um 120° gegeneinander versetzte Stempel werden gemeinsam betätigt, d.h. entweder gemeinsam geöffnet oder gemeinsam geschlossen. Die Elemente A und B nach Figur 4 sind, ebenso wie der Zu- und Abfluß an diagonal gegenüberliegenden Zu- bzw. Ableitungsbohrungen 7 angeschlossen. Dies hat den Vorteil, daß alle Verbindungsleitungen außerhalb des Ventil angeordnet werden können.

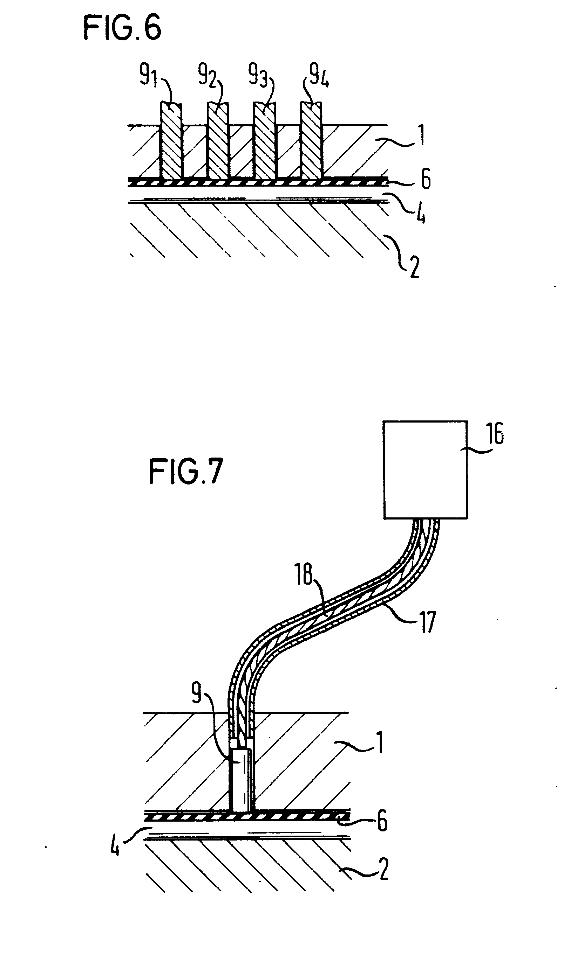

Figur 6 zeigt schematisch eine Ausführungsform des erfindungsgemäßen Ventils, mit der gemischt oder gefördert werden kann. Diese Ausführungsform weist vier aufeinanderfolgend an einem Kanal 4 angeordnete Stempel $9_1$, $9_2$, $9_3$ und $9_4$ auf. Zum Mischen werden die beiden endständigen Stempel $9_1$ und $9_4$ so weit in den Kanal 4 gedrückt, daß das dazwischenliegende Volumen abgeschlossen ist. Dann werden die mittleren Stempel $9_2$ und $9_3$ abwechselnd in den Kanal gedrückt, so daß das zwischen den Stempeln $9_1$ und $9_4$ eingeschlossene Medium hin und her bewegt und dabei gemischt wird. Wenn es sich bei dem Medium um ein inkompressibles Medium handelt, müssen die Stempel $9_2$ und $9_3$ schon vor dem Abschließen des Volumens durch die Stempel $9_1$ und $9_4$ geringfügig in den Kanal gedrückt sein, weil sonst das Medium nicht mehr bewegt werden könnte. Soll diese Ausführungsform des erfindungsgemäßen Ventils zur Förderung eines Mediums verwendet werden, so müssen die Stempel $9_1$ bis $9_4$ aufeinanderfolgend so in den Kanal 4 gedrückt werden, daß die Einhüllende ihrer Berührflächen mit der Membran 6 eine wellenförmige Bewegung ausführt. Zur Förderung genügen im Prinzip drei nebeneinanderliegende Stempel.

Figur 7 zeigt einen schematisch dargestellten Elektromagnet 16, dessen (nicht dargestellter) beweglicher Anker über ein nach Art eines Bowdenzugs in einer flexiblen Hülle 17 geführtes, drucksteifes, flexibles Betätigungsorgan 18 auf den im Grundkörper 1 geführten Stempel 9 einwirkt. Anstelle des Elektromagneten 16 kann auch ein hydraulischer oder pneumatischer Zylinder vorgesehen sein. Sofern der Stempel 9 abgedichtet im Grundkörper 1 geführt

0002173

ist, wirkt er als Kolben einer Kolben-Zylinder-Einheit, die über eine Zuleitung mit hydraulischem oder pneumatischem Steuerdruck beaufschlagt werden kann.

Das erfindungsgemäße Ventil zeichnet sich dadurch aus, daß sich auch umfangreichere Kanalnetze mit einer Vielzahl Absperrstellen bei geringem Aufwand und ohne Schwierigkeiten verwirklichen lassen.

0002173

Patentansprüche

1. Ventil zur Steuerung von Strömungsmedien, gekennzeichnet durch einen Grundkörper (1) mit mindestens einem in seine Oberfläche (3) eingearbeiteten rinnenförmigen Kanal (4) zur Führung des Strömungsmediums, eine den Kanal abdeckende elastische Membran (6), einen die Membran zur seitlichen Abdeckung des Kanals gegen die Oberfläche des Grundkörpers (1) drückenden Gegenkörper (2) und wenigstens einen durch den Gegenkörper geführten Stempel (9), mittels welchem die Membran elastisch verformend in den Kanal drückbar ist.

2. Ventil nach Anspruch 1, dadurch gekennzeichnet, daß den Grundkörper (1) durchsetzende in den oder die Kanäle (4) mündende Zu- und Ableitungsbohrungen (7) vorgesehen sind.

3. Ventil nach Anspruch 2, dadurch gekennzeichnet, daß der bzw. die Stempel (9) zwischen den Zu- und Ableitungsbohrungen (7) in den Kanal (4) drückbar angeordnet sind.

4. Ventil nach Anspruch 3, dadurch gekennzeichnet, daß durch Eindrücken eines oder mehrerer Stempel (9) das Kanalvolumen zwischen zwei definierten Stellen beseitigbar ist.

5. Ventil nach Anspruch 4, dadurch gekennzeichnet, daß der oder die Stempel (9) mit in Kanalrichtung verlaufendem T-förmigem Kopf (10) ausgebildet sind.

6. Ventil nach einem der Ansprüche 1 bis 5, wobei mehrere Stempel vorgesehen sind, dadurch gekennzeichnet, daß mindestens vier Stempel (9) nebeneinander längs eines Kanals (4) angeordnet sind und daß die Stempel so steuerbar sind, daß die endständigen Stempel den Kanal sperren und die mittenständigen Stempel abwechselnd in den Kanal drücken.

7. Ventil nach einem der Ansprüche 1 bis 5, wobei mehrere Stempel vorgesehen sind, dadurch gekennzeichnet, daß mindestens drei Stempel (9) längs eines Kanals (4) angeordnet sind und daß die Stempel aufeinanderfolgend in den Kanal drückend steuerbar sind.

8. Ventil nach einem der vorstehenden Ansprüche, wobei mehrere Kanäle und mehrere Stempel vorgesehen sind, dadurch gekennzeichnet, daß die Kanäle (4) ein Leitungsnetz bilden und daß die Stempel (9) wechselnde Leitungswege freigebend steuerbar sind.

9. Ventil nach Anspruch 8, dadurch gekennzeichnet, daß die Kanäle (4) in Form eines regelmäßigen Vieleckes in dem Grundkörper (1) angeordnet sind, in dessen Eckpunkten Zu- und Ableitungsbohrungen (7) münden.

10. Ventil nach Anspruch 8, dadurch gekennzeichnet, daß in dem Grundkörper zwei Kanäle (4a, b) angeordnet sind, von denen der erste Kanal (4b) durch zwei im Abstand voneinander angeordnete Stempel (9a, 9f) verschließbar ist und über zwei im Abstand voneinander zwischen diesen Stempeln (9a, 9f) in den ersten Kanal (4b) mündende weitere Kanäle mit dem zweiten Kanal (4a) verbunden ist, daß der zweite Kanal durch wenigstens einen Stempel (9c, 9d) zwischen den beiden weiteren Kanälen verschließbar ist und daß die beiden weiteren Kanäle durch Stempel (9b, 9e) verschließbar sind.

11. Ventil nach einem der vorhergehenden Ansprüche, dadurch gekennzeichnet, daß die Stempel (9) durch Nocken oder Elektromagnete oder hydraulische pder pneumatische Zylinder betätigbar sind.

12. Ventil nach Anspruch 11, dadurch gekennzeichnet, daß die Elektromagnete (16) oder die hydraulischen oder pneumatischen Zylinder über auf Druck beanspruchbare flexible Organe (17, 18), insbesondere nach Art von Bowdenzügen, auf die Stempel (9) einwirken.

13. Ventil nach Anspruch 11, dadurch gekennzeichnet, daß die Stempel (9) parallel zur Drehachse einer mit axial vorstehenden Nocken (15) versehenen, auf die Stempel (9) einwirkenden Nockenscheibe (14) angeordnet sind.

14. Ventil nach Anspruch 13, dadurch gekennzeichnet, daß die Stempel (9) in Eckpunkten eines regelmäßigen Vielecks gerader Kantenzahl angeordnet sind, daß die Nocken (15) gleichen Winkelabstand voneinander haben und daß die Zahl der Stempel (9) doppelt so groß ist wie die Zahl der Nocken (15).

FIG.1

FIG.2

## FIG.3

Grundsubstanz

dosiert zuzuführende
Substanz

## FIG.4

Zufluß

A    B

Abfluß

FIG.5

FIG.6

FIG.7

**Europäisches Patentamt**

**EUROPÄISCHER RECHERCHENBERICHT**

Nummer der Anmeldung

EP 78 100 626.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 243 435 (CHEMOPROJEKT) <br> * Seite 1, Zeilen 56 bis 75; <br> Fig. 1, 2, 3 * | 1-4, 8,9, 11,13, 14 |
| | -- | |
| - | US - A - 4 006 753 (J.R. INGRAM et al) <br> * Fig. 1, 2 * | 1,2 |
| | -- | |
| - | DE - A - 2 123 914 (SIEMENS) <br> * Fig. 1, 11 * | 1,2, 9 |
| | -- | |
| - | GB - A - 1 269 498 (PERKIN-ELMER) <br> * Fig. 1 bis 4 * | 1-4, 8,9, 11,13, 14 |
| | -- | |
| - | FR - A - 2 325 869 (SEDIMMEC) <br> * Fig. 1, 2 * | 1,5 |
| | -- | |
| A | DE - B - 1 153 217 (K. STOCK) <br> * Fig. 4 * | 1 |
| | -- | |
| A | DE - U - 1 945 040 (SIEMENS UND HALSKE) <br> * Fig. 1, 2 * <br> .../.. | 1 |
| | -- | |

**KLASSIFIKATION DER ANMELDUNG (Int.Cl.²)**

F 16 K 7/12
F 16 K 11/16
// F 16 K 31/528

**RECHERCHIERTE SACHGEBIETE (Int. Cl.³)**

F 16 K 7/00
F 16 K 11/00
F 16 K 31/528

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 07-02-1979 | SCHLABBACH |

EPA form 1503.1 06.78

Europäisches
Patentamt

EUROPÄISCHER RECHERCHENBERICHT

Nummer der Anmeldung

EP 78 100 626.7
- Seite 2 -

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 3 464 448 (R. SCHMITZ) <br> * Fig. 2, 3 * <br><br> ---- | 1 |

KLASSIFIKATION DER ANMELDUNG (Int.Cl.³)

RECHERCHIERTE SACHGEBIETE (Int. Cl.³)